# EUROPEAN PATENT APPLICATION

(11) **EP 3 905 591 A1**
(43) Date of publication of application: **03.11.2021**
(21) Application number: 19906538.4
(22) Date of filing: 17.01.2019
(51) Int. Cl.: H04L 12/24

(54) **SERVER ABNORMALITY PROCESSING METHOD AND MANAGEMENT DEVICE**

(30) Priority: 29.12.2018 CN 201811648017
(71) Applicant: Wangsu Science & Technology Co., Ltd., Shanghai 200030 (CN)
(72) Inventor: SUN, Yunyun, Shanghai 200030 (CN)
(74) Representative: De Arpe Tejero, Manuel
(86) International application number: PCT/CN2019/072176
(87) International publication number: WO 2020/133609

(57) **Abstract**

The present disclosure provides a method and a managing apparatus for processing server anomalies. The method includes: acquiring, by a managing apparatus, operation information of each server; if the managing apparatus determines that a first server has an anomaly according to the operation information of each server, determining, by the managing apparatus, a target processing method according to the operation information of the first server and a preset correspondence between the operation information of anomalies and processing methods; and generating, by the managing apparatus, a processing instruction according to the target processing method, and sending, by the managing apparatus, the processing instruction to the first server, such that the first server executes the processing instruction and processes using the target processing method. In the present disclosure, the managing apparatus can automatically complete the server anomaly detection according to the operation information of servers, and servers can also execute the processing instructions according to the received processing instructions to complete anomaly processing. Further, passive waiting for manual processing can be substituted by active automatic analysis and processing, thereby to reduce server anomaly processing time and improve the stability of service quality.

## Description

### FIELD OF THE DISCLOSURE

The present disclosure generally relates to the field of server technologies and, more particularly, relates to method and managing apparatus for processing server anomalies.

### BACKGROUND

As Internet technologies develop rapidly, users have higher and higher requirements on speed for accessing the Internet. More and more network providers use CDN to perform acceleration services. For a CDN system, requirements on network quality are high, and server anomalies need to be discovered promptly and processed promptly.

In existing technologies, once an anomaly occurs on the server, a workflow for manual operation needs to be triggered. However, there are various causes of server anomalies. For different causes, the server anomalies need to be processed manually. The process is tedious, and it is easy happen that manual processing is not timely. A service interruption period may be extended.

Based on this, it is imperative to provide a server anomaly processing method to alleviate problems of tedious, time-consuming and labor-intensive manual processing of server anomalies, in the existing technologies.

### SUMMARY

The disclosed embodiments of the present disclosure provide a method and a managing apparatus for processing server anomalies, to solve technical problems of tedious, time-consuming and labor-intensive manual processing of server anomalies in existing technologies. The technical solutions include the following.

One aspect of the present disclosure provides a method for processing server anomalies. The method includes:
acquiring, by a managing apparatus, operation information of each server;
if the managing apparatus determines that a first server has an anomaly according to the operation information of the each server, determining, by the managing apparatus, a target processing method according to the operation information of the first server and a preset correspondence between operation information of anomalies and processing methods; and
generating, by the managing apparatus, a processing instruction according to the target processing method, and sending, by the managing apparatus, the processing instruction to the first server, such that the first server executes the processing instruction and use the target processing method to process.

Correspondingly, after the managing apparatus determines that a server has an anomaly, the managing apparatus may determine a target processing method according to the operation information of the first server and a preset correspondence between the operation information of anomalies and processing methods; and then generate a processing instruction according to the target processing method and send the processing instruction to the first server, such that the first server executes the processing instruction and uses the target processing method to process. The whole process may not require human participant and the managing apparatus may determine whether a server has an anomaly automatically according to the operation information of the servers, and may also automatically send the processing instruction to the first server having the anomaly, to make the first server having the anomaly automatically process the anomaly. Compared with the existing method for manually processing server anomalies, in the present disclosure, the managing apparatus may automatically complete the server anomaly detection according to the operation information of the servers, and the servers can also execute the processing instructions according to the received processing instructions to complete anomaly processing. Further, by adopting the technical solution provided by the embodiment of the present disclosure, passive waiting for manual processing may be substituted by active automatic analysis and processing, thereby reducing server anomaly processing time and improving the stability of service quality.

Optionally, in one embodiment, the operation information includes a type of a software anomaly; and
determining, by the managing apparatus, the target processing method according to the operation information of the first server and the preset correspondence between the operation information of the anomalies and the processing methods, includes:
determining, by the managing apparatus, at least one target analysis instruction according to the type of the software anomaly corresponding to the first server and a preset correspondence between types of software anomalies and analysis instructions, wherein the analysis instructions are configured to analyze causes of the software anomalies;
sending, by the managing apparatus, the at least one analysis instruction to the first server, such that the first server executes the at least one analysis instruction and generates at least one receipt message according to an execution result; and
after receiving the at least one receipt message from the first server and determining the cause of the software anomaly according to the at least one receipt message, determining, by the managing apparatus, the target processing method according to a preset correspondence between causes of the anomalies and the processing methods.

Optionally, in one embodiment, sending, by the managing apparatus, the at least one analysis instruction to the first server, such that the first server executes the at least one analysis instruction and generates the at least one receipt message according to the an execution result, includes: for a first target analysis instruction, sending, by the managing apparatus, the first target analysis instruction to the first server, such that the first server executes the first target analysis instruction and generates first receipt message according to the execution result, where the first target analysis instruction is any one target analysis instruction of the at least one target analysis instruction and is configured to analyze a first cause inducing the software anomaly; and
after the managing apparatus receives the at least one receipt message from the first server and determines the cause of the software anomaly according to the at least one receipt message, determining, by the managing apparatus, the target processing method according to a preset correspondence between the causes of the anomalies and the processing methods, includes: if the software anomaly is determined to be induced by the first cause according to the first receipt message by the managing apparatus, determining, by the managing apparatus, the target processing method according to the first cause and the correspondence between the anomaly causes and the processing methods.

Optionally, in one embodiment, the method further includes:
if the managing apparatus determines that the software anomaly is not induced by the first cause according to the first receipt message, sending, by the managing apparatus, a second target analysis instruction to the first server, until the managing apparatus determines that the software anomaly is induced by a second cause according to a second receipt message, where:
the second target analysis instruction is any one target analysis instruction of the at least one target analysis instruction except the first target analysis instruction, and is configured to analyze the second cause inducing the software anomaly; and
the second receipt message is generated according to the execution result after the first server executes the second target analysis instruction.

Optionally, in one embodiment, after sending the processing instruction to the first server by the managing apparatus, the method further includes:
receiving, by the managing apparatus, updated operating information from the first server; and
if the managing apparatus determines that the first server has no anomaly according to the updated operating information, recording, by the managing apparatus, history processing records corresponding to the first server, where the history processing record is configured to update the preset correspondence between the operation information of the anomalies and the processing methods.

Another aspect of the present disclosure provides another method for processing server anomalies. The method includes:
receiving, by a server, a processing instruction from a managing apparatus, where: the processing instruction is generated according to a target processing method, and the target processing method is determined by the managing apparatus according to operation information of the server and a preset correspondence between operation information of anomalies and processing methods when the managing apparatus determines that the server has an anomaly; and
executing, by the server, the processing instruction, to process the anomaly using the target processing method.

Optionally, in one embodiment, the operation information includes a type of a software anomaly;
before receiving, by the server, the processing instruction from the managing apparatus, the method further includes:
receiving, by the server, at least one analysis instruction from the managing apparatus, where: the at least one target analysis instruction is determined by the managing apparatus according to the type of the software anomaly corresponding to the first server and a preset correspondence between types of software anomalies and analysis instructions, and the analysis instructions are configured to analyze causes of the software anomalies;
executing, by the server, the at least one analysis instruction and generating at least one receipt message according to an execution result; and
sending, by the server, the at least one receipt message to the managing apparatus, such that the managing apparatus determines the cause of the software anomaly according to the at least one receipt message and determines the target processing method according to a preset correspondence between causes of the anomalies and the processing methods.

Optionally, in one embodiment,
executing, by the server, the at least one analysis instruction and generating the at least one receipt message according to the execution result, includes: for a first target analysis instruction, executing, by the server, the first target analysis instruction and generating, by the server, a first receipt message according to the execution result, where the first target analysis instruction is any one target analysis instruction of the at least one target analysis instruction and is configured to analyze the first cause inducing the software anomaly; and
sending, by the server, the at least one receipt message to the managing apparatus, such that the managing apparatus determines the cause of the software anomaly according to the at least one receipt message and determines the target processing method according to a pre-configured correspondence between the causes of the anomalies and the processing methods, includes: sending, by the server, the first receipt message to the managing apparatus; and if the managing apparatus determines that the software anomaly is induced by a first causes, determining, by the server, the target processing method according to a first cause and the correspondence between the anomaly causes and the processing methods

Optionally, in one embodiment, the method further including:
receiving, by the server, a second target analysis instruction from the managing apparatus, where: the second target analysis instruction is any one target analysis instruction of the at least one target analysis instructions except the first target analysis instruction, and is configured to analyze the second cause inducing the software anomaly;
executing, by the server, the second target analysis instruction, and generating, by the server, a second receipt message; and
sending, by the server, the second receipt message to the managing apparatus.

Optionally, in one embodiment, the method further including:
sending, by the server, updated operation information to the managing apparatus, such that the managing apparatus records a history processing record corresponding to the server, where the history processing record is configured to update the pre-configured correspondence between the operation information of the anomaly and the processing methods.

Another aspect of the present disclosure provides a managing apparatus. The apparatus includes:
a receiving module, configured to receive operation information of each server;
a processing module, configured to determine a target processing method according to the operation information of a first server and a preset correspondence between the operation information of anomalies and processing methods when the managing apparatus determines that the first server has an anomaly according to the operation information of the each server, and generate a processing instruction according to the target processing method; and
a transmission module, configured to send the processing instruction to the first server, such that the first server executes the processing instruction and uses the target processing method to process.

Optionally, in one embodiment:
the operation information includes a type of a software anomaly;
the processing module is configured to determine at least one target analysis instruction according to the type of the software anomaly corresponding to the first server and a pre-configured correspondence between types of software anomalies and analysis instructions, where the analysis instructions are configured to analyze causes of the software anomalies;
the transmission module is configured to send the at least one analysis instruction to the first server such that the first server executes the at least one analysis instruction and generates at least one receipt message according to an execution result;
the receiving module is configured to receive the at least one receipt message from the first server; and
the processing module is further configured to: after determining the cause of the software anomaly according to the at least one receipt message, determine the target processing method according to a pre-configured correspondence between the causes of the anomalies and the processing methods.

Optionally, in one embodiment:
the transmission module is configured to: for a first target analysis instruction, send the first target analysis instruction to the first server, such that the first server executes the first target analysis instruction and generates a first receipt message according to the execution result, where the first target analysis instruction is anyone target analysis instruction of the at least one target analysis instructions and is configured to analyze the first cause inducing the software anomaly; and
the processing module is configured to: determine the target processing method according to a first cause and the correspondence between the anomaly causes and the processing methods if the software anomaly is determined to be induced by the first cause according to the first receipt message.

Optionally, in one embodiment, the processing module is configured to:
if the managing apparatus determines that the software anomaly is not induced by the first cause according to the first receipt message, sending, by the managing apparatus, a second target analysis instruction to the first server, until the managing apparatus determines that the software anomaly is induced by a second cause according to a second receipt message, where:
the second target analysis instruction is any one target analysis instruction of the at least one target analysis instructions except the first target analysis instruction, and is configured to analyze the second cause inducing the software anomaly; and
the second receipt message is generated according to the execution result after the first server executes the second target analysis instruction

Optionally, in one embodiment:
after the transmission module sends the processing instruction to the first server, the receiving module is further configured to receive updated operating information from the first server; and
the processing module is further configured to: when the managing apparatus determines that the first server has no anomaly according to the updated operating information, record a history processing record corresponding to the first server, where the history processing record is configured to update the pre-configured correspondence between the operation information of the anomaly and the processing methods.

Another aspect of the present disclosure provides a device. The device is configured to implement the above method for processing server anomalies. The implementation is achieved by a hardware executing corresponding software. In one embodiment, the device includes: a processor, a transceiver, and a memory. The memory is configured to store computer-executable instructions, and the transceiver is configured to implement communication between the device and other entities. The processor is connected to the memory through buses. When the device is running, the processor is configured to execute the computer-executable instructions stored in the memory, to make the device implement the above method for processing server anomalies described above.

Another aspect of the present disclosure provides a computer storage medium. The storage medium stores software programs. When the software programs are read and executed by one or more processor, the above method for processing server anomalies described above is implemented.

Another aspect of the present disclosure provides a computer program product including instructions. When the instructions are executed by a computer, the computer implements, the computer implements the above method for processing server anomalies described above.

Other aspects or embodiments of the present disclosure can be understood by those skilled in the art in light of the description, the claims, and the drawings of the present disclosure.

### BRIEF DESCRIPTION OF THE DRAWINGS

To more clearly illustrate the technical solutions of the present disclosure, the accompanying drawings to be used in the description of the disclosed embodiments are briefly described hereinafter.
FIG. 1 illustrates an exemplary system structure consistent with various embodiments of the present disclosure;
FIG. 2 illustrates an exemplary server anomaly processing method consistent with various embodiments of the present disclosure;
FIG. 3 illustrates an exemplary managing apparatus consistent with various embodiments of the present disclosure; and
FIG. 4 illustrates an exemplary sever consistent with various embodiments of the present disclosure.

### DETAILED DESCRIPTION

The present disclosure is further illustrated in detail with reference to the accompanying drawings in conjunction with embodiments. Operation methods in the method embodiments may be applied to the device embodiments of the present disclosure.

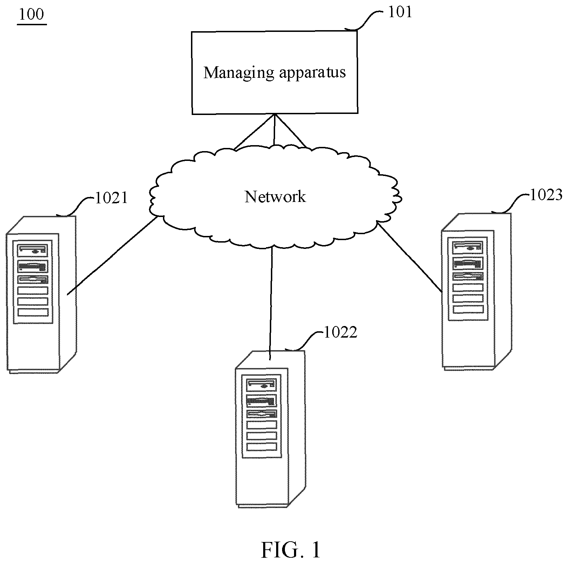

FIG. 1 illustrates an exemplary system structure consistent with various embodiments of the present disclosure. As illustrated in FIG. 1, the system 100 consistent with various embodiments of the present disclosure may include a managing apparatus 101 and a plurality of servers. The plurality of servers may include a server 1021, a server 1022 and a server 1023 as illustrated in FIG. 1. The managing apparatus 101 may communicate with any one of the plurality of servers through a network. For example, as illustrated in FIG. 1, the managing apparatus 101 may acquire information from the server 1021 and send information to the server 1021 through the network, the managing apparatus 101 may also acquire information from the server 1022 and send information to the server 1022 through the network, and the managing apparatus 101 may also acquire information from the server 1023 and send information to the server 1023 through the network.

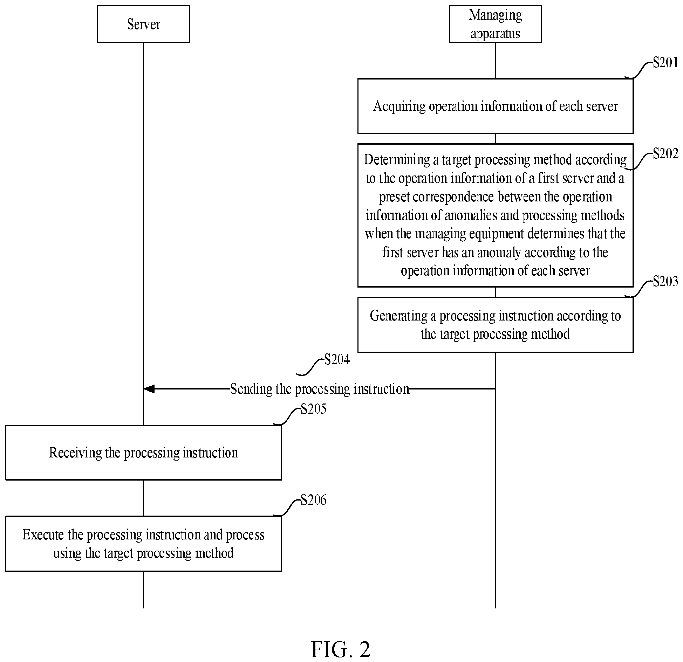

The present disclosure provides a method for processing server anomalies based on the system structure illustrated in FIG. 1, as illustrated in FIG. 2, and the method may include:
Step 201: acquiring, by the managing apparatus, operating information of each of the plurality of servers;
Step 202: if the managing apparatus determines that a first server of the plurality of servers has an anomaly according to the operating information of each of the plurality of servers, determining, by the managing apparatus, a target processing method according to the operating information of the first server and a preset correspondence between the operating information of the anomaly and the process methods;
Step 203: generating, by the managing apparatus, processing instructions according to the target processing method;
Step 204: sending, by the managing apparatus, the processing instructions to the first server;
Step 205: receiving, by the first server, the processing instructions from the managing apparatus; and
Step 206: executing, by the first server, the processing instructions and processes the anomaly using the target processing method.

Therefore, in the present disclosure, when the managing apparatus determines that the first server of the plurality of servers has an anomaly (that is, the abnormal server), the managing apparatus may determine the target processing method according to the operating information of the first server and the preset correspondence between the operating information of the anomaly and the process methods, and generate processing instructions according to the target processing method. The processing instructions may be sent to the abnormal server by the managing apparatus. The abnormal server may execute the processing instructions and process the anomaly using the target processing method. The whole process may not require manual participation. The managing apparatus may automatically determine whether one of the plurality of servers has an anomaly and automatically send the processing instructions to the abnormal server to make the abnormal server automatically process the anomaly. It can be saw that, compared to a method for manually processing the server anomalies in the existing technologies, the managing apparatus may automatically complete the anomaly detection on the plurality of servers and each of the plurality of servers may complete the anomaly processing according to the processing instructions received from the managing apparatus, in the present disclosure. Further, passive waiting for the manual processing in existing technologies may be substituted by automatic analysis and processing. Processing time for processing the server anomaly may be reduced, and stability of service quality may be improved.

Specifically, in Step 201 and Step 202, the operation information of each server of the plurality of servers may include a server identification of the server and operation status of the server.

The managing apparatus may determine whether one server of the plurality of servers has an anomaly in different ways. In one embodiment, the managing apparatus may acquire the server identification of each server of the plurality of servers and the operation status of each server of the plurality of servers, and then may further determine whether a first server whose operation status is an anomaly status exists according to the server identification of each server of the plurality of servers and the operation status of each server of the plurality of servers. When the first server, whose operation status is anomaly status, exists, the managing apparatus may determine that the first server has an anomaly.

In some other embodiments, the managing apparatus may determine the servers with anomaly through an external monitoring device. The external monitoring device may acquire the server identification of each server of the plurality of servers and the operation status each server of the plurality of servers and then determine the servers with the anomaly.

Further, the operation information of each server of the plurality of servers may include anomaly information of the server, the server identification of the server, and time stamp information of the server. The anomaly information may include types of software anomalies and types of hardware anomalies. The types of software anomalies may refer to anomalies caused by software services, including anomalies induced by software services such as squid service for cache acceleration and haproxy service for load balance schedule. The types of hardware anomalies may be anomalies caused by hardware services, such as server down. The server identification may be configured to identify the server, and may be represented by a manner including letters, numbers, or symbols. The timestamp information may refer to the time when the managing apparatus obtains the anomaly information.

Table 1 illustrates an example of anomaly information of the servers. First anomaly information in Table 1 may be the anomaly induced by a squid service of Server A and the managing apparatus may obtain the first anomaly information at 8:00:00. Second anomaly information may be the anomaly induced by a haproxy service of Server B and the managing apparatus may obtain the second anomaly information at 9:00:00. Third anomaly information may be that Server C is shut down and the managing apparatus may obtain the third anomaly information at 10:00:00. As illustrated in Table 1, the first anomaly information and the second anomaly information may belong to the type of software anomaly, and the third anomaly information may belong to the type of hardware anomaly.

**Table 1: Examples of anomaly information of servers**

| Numbering of anomaly information | Server identification | Anomaly type information | Timestamp information |
|---|---|---|---|
| 1 | Server A | Anomaly induced by squid service | 8:00:00 |
| 2 | Server B | Anomaly induced by haproxy service | 9:00:00 |
| 3 | Server C | The server is shut down | 10:00:00 |

Before performing Step 202, the managing apparatus may determine whether the information of the anomaly type corresponding to the server is software anomaly. If the information of the anomaly type corresponding to the server is software anomaly, subsequent steps may be performed. If the information of the anomaly type corresponding to the server is not a software anomaly, the process may be terminated. This is because the anomaly induced by the server shut down may be processed by an automatic processing method of the server shut down. The present disclosure may mainly provide a method for processing the server anomalies induced by software services.

In Step 203 to Step 206, the managing apparatus may be pre-configured with the correspondence between the anomaly information and the processing methods. Through the personalized configuration, the managing apparatus may adapt to the change of the processing methods during a continuous change of the software versions and the diversity of the causes of server anomalies. Further, since the current software versions change quickly, similar anomaly causes may occur in different software versions, but different software versions may require different processing methods. The various embodiments of the present disclosure may adapt to this situation by a pre-configured manner. After the change of the software versions, the need to modify the codes to update the automatic analysis may be effectively avoided.

Specifically, the managing apparatus may be pre-configured with the correspondence between the types of the software anomaly and the analysis instructions. Through the correspondence between the types of the software anomaly and the analysis instructions, different analysis instructions corresponding to different types of the software anomaly may be determined. Further, the managing apparatus may send the analysis instructions to the first server such that the first server may execute the analysis instructions to analyze. Among them, the analysis instructions may include analysis commands, receipt message to be obtained, and which processing instruction needs to be specified for processing according to different receipt message. The analysis instructions may be configured to analyze the causes of the software anomaly. The managing apparatus may determine the types of the software anomaly first. Among them, the types of the software anomaly may include a squid service, a haproxy service, or other services. The types of the software anomaly that need to be pre-configured may usually correspond to important service configurations that will affect user use, thereby reducing the impact on acceleration services. Some other less important services may also be pre-configured correspondingly, while the priority of the services with lower importance may be lower than the priority of important services.

After executing the analysis instructions, the first server may further determine the receipt message according to the execution result and send the receipt message back to the managing apparatus. After receiving the receipt message, the managing apparatus may determine whether the first server really has an anomaly according to the receipt message. If the first server really has the anomaly, the managing apparatus may determine the causes of the software anomaly according to the receipt message, and then determine the target processing method according to the pre-configured correspondence between the anomaly causes and the processing methods. If the first server has no anomaly, Step 201 may be executed again.

After determining the target processing method, the managing apparatus may further generate processing instructions according to the target processing method and may send the processing instructions to the first server. After receiving the processing instructions, the first server may execute the processing instructions. That the first server executes the processing instructions may mean that the first server processes the anomaly using the target processing method.

Specifically, for a first target analysis instruction, the managing apparatus may send the first target analysis instruction to the first server. The first server may execute the first target analysis instruction and generate first receipt message according to the execution result. Then the first server may send the first receipt message to the managing apparatus and the managing apparatus may determine whether the software anomaly is induced by a first cause according to the first receipt message. If the software anomaly is induced by the first cause, the managing apparatus may determine the target processing method according to the first cause, and the correspondence between the anomaly causes and the processing methods. If the software anomaly is not induced by the first cause, the managing apparatus may send a second target analysis instruction to the first server. The first server may execute the second target analysis instruction and generate second receipt message according to the execution result. The first server may send the second receipt message to the managing apparatus and the managing apparatus may determine whether the software anomaly is induced by a second cause according to the second receipt message. The first target analysis instruction may be any one target analysis instruction of at least one target analysis instructions, and may be configured to analyze the first cause inducing the software anomaly; and the second target analysis instruction may be any one target analysis instruction of at least one target analysis instructions except the first target analysis instruction, and may be configured to analyze the second cause inducing the software anomaly.

Table 2 illustrates an exemplary correspondence between the types of the software anomalies and the analysis instructions. When the software anomaly is an anomaly induced by the squid service, corresponding analysis instruction may be the analysis instruction A1 and the analysis instruction A2. The analysis instruction A1 may only analyze the first cause of the anomaly induced by the squid service and the analysis instruction A2 may only analyze the second cause of the anomaly induced by the squid service. When the software anomaly is an anomaly induced by the haproxy service, corresponding analysis instruction may be the analysis instruction B1, the analysis instruction B2, and the analysis instruction B3. The analysis instruction B1 may only analyze a first cause of the anomaly induced by the haproxy service, the analysis instruction B2 may only analyze a second cause of the anomaly induced by the haproxy service, and the analysis instruction B3 may only analyze a third cause of the anomaly induced by the haproxy service. It should be noted that the analysis instructions (A1 and A2) corresponding to the anomaly induced by the squid service may be independent from the analysis instructions (B1, B2, and B3) corresponding to the haproxy service, there may be no relationship between the analysis instructions (A1 and A2) and the analysis instructions (B1, B2, and B3).

**Table 2: Correspondence between types of software anomalies and analysis instructions**

| Types of software anomalies | Analysis instructions |
|---|---|
| squid service | analysis instruction A1 |
| | analysis instruction A2 |
| haproxy service | analysis instruction B1 |
| | analysis instruction B2 |
| | analysis instruction B3 |

Further, in a specific analysis process, when the type of the software anomaly belongs to the anomaly induced by the squid service, the managing apparatus may determine that the target analysis instructions include the analysis instruction A1 and the analysis instruction A2, as illustrated in Table 2. The managing apparatus may further send the analysis instruction A1 to the first server. The first server may execute the analysis instruction A1 and generate first receipt message according to the execution result. The first server may send the first receipt message to the managing apparatus such that the managing apparatus may determine whether the software anomaly is induced by the first cause according to the first receipt message. Further, if the software anomaly is not induced by the first cause, the managing apparatus may then send the analysis instruction A2 to the first server. The first server may execute the analysis instruction A2 and generate second receipt message according to the execution result. The first server may send the second receipt message to the managing apparatus and the managing apparatus may determine whether the software anomaly is induced by the second cause according to the second receipt message. Similarly, the above flow may also be configured to analyze the software anomaly induced by the haproxy service.

The managing apparatus may further be pre-configured with the correspondence between the anomaly causes and the processing methods. Therefore, after receiving the receipt message, the managing apparatus may determine the cause inducing the software anomaly according to the receipt message and then determine different processing methods for different anomaly causes according to the correspondence between the anomaly causes and the processing methods. Then the managing apparatus may generate the processing instruction according to the determined processing method and send the processing instruction to the first server. The first server may execute the processing instruction to process the anomaly according to the determined processing method. Table 3 illustrates an exemplary correspondence between the anomaly causes and the processing methods. The software anomaly induced by a first cause may be processed with a processing method a1. The software anomaly induced by a second cause may be processed with a processing method a2. The software anomaly induced by a third cause may be processed with a processing method b1. The software anomaly induced by a fourth cause may be processed with a processing method b2. The software anomaly induced by a fifth cause may be processed with a processing method b3.

**Table 3: Correspondence between anomaly causes and processing methods**

| Anomaly causes | Processing methods |
|---|---|
| First cause | Processing method a1 |
| Second cause | Processing method a2 |
| Third cause | Processing method b 1 |
| Fourth cause | Processing method b2 |
| Fifth cause | Processing method b3 |

That is, the managing apparatus may determine at least one target analysis instruction according to the type of the software anomaly corresponding to the first server, and the pre-configured correspondence between the types of the software anomalies and the analysis instructions. The managing apparatus then may send the at least one target analysis instruction to the first server and determine the cause of the software anomaly according to the receipt message returned by the first server. Subsequently, the managing apparatus may determine the target processing method and generate the processing instruction according to the correspondence between the anomaly causes and the processing methods. The managing apparatus may send the processing instruction to the first server and the first server may execute the processing instruction to process the anomaly. For example, the analysis instruction A1 corresponding to the squid service anomaly may be: sysCheckForSquid. The analysis instruction A1 may be executed to generate two corresponding receipt messages including a receipt message 1 and a receipt message 2. The receipt message 1 may be: cache_dir, and the receipt message 2 may be: dead. The receipt message 1 may correspond to a processing method 1, and the receipt message 2 may correspond a processing method 2. The processing method 1 may be: creating a cache directory. The processing method 2 may be: service squid restart. When the managing apparatus determines that the first server has the squid service anomaly according to the operation information of the first server, the managing apparatus may determine that the target analysis instruction is the analysis instruction A1 (that is, sysCheckForSquid) according to the pre-configured correspondence between the types of the software anomalies and the analysis instructions. The managing apparatus then may send the analysis instruction A1 to the first server. The first server may execute the analysis instruction A1 to get the corresponding receipt message according to the execution results, and then send the receipt message corresponding to the analysis instruction A1 to the managing apparatus. The managing apparatus may determine the cause of the software anomaly according to the receipt message after receiving the receipt message corresponding to the analysis instruction A1 from the first server. When the receipt message is "xxxxx cache_dir xxxxx", the cause of the software anomaly may be that the cache directory is empty. Correspondingly, the managing apparatus may determine that the target processing method is the processing method 1 and the processing method 2 according to the pre-configured correspondence between the anomaly causes and the processing methods. The managing apparatus may generate the processing instruction according to the processing method 1 and the processing method 2, and send the processing instruction to the first server. After receiving the processing instruction, the first server may create the cache directory and restart the squid service. When the receipt message is "xxxxx cache dir xxxxxxxx dead xxx", the cause of the software anomaly may be service anomaly. Correspondingly, the managing apparatus may determine that the target processing method is the processing method 2 according to the pre-configured correspondence between the anomaly causes and the processing methods. The managing apparatus may generate the processing instruction according to the processing method 2, and send the processing instruction to the first server. After receiving the processing instruction, the first server may restart the squid service.

After performing Step 203, whether the anomaly of the first server is resolved may be further determined. The first server may send the updated operating information to the managing apparatus. Like Step 201, the updated operating information may include the updated operating status corresponding to the first server. After receiving the updated operating information, the managing apparatus may determine whether the updated operating status of the first server corresponds to the first server with anomaly. If the updated operating status of the first server corresponds to the first server with anomalies, the anomaly of the first server is not resolved. If the updated operating status of the first server does not correspond to the first server with anomalies, the anomaly of the first server is resolved.

Further, when the managing apparatus determines that the anomaly of the first server is resolved, the managing apparatus may record the processing information. The processing information may be configured to analyze the frequency of the anomaly subsequently, for improving related software. Also, by analyzing the software's own vulnerability, and further optimization direction of the software may be found combined with the anomaly server, to improve the software itself. Better processing methods may be found to optimize the configuration of processing instructions. The software and the processing methods of the server anomalies may be improved continuously.

Further, when the managing apparatus determines that the anomaly of the first server is not resolved, an anomaly time (a difference between the current time and a time when the managing apparatus receives the anomaly information) may be determined. When the anomaly time is larger than a preset threshold, a "failure registration" operation may be performed to the first server and an email may be sent to relevant software administrator. When the anomaly time is smaller than the preset threshold, the first server may be detected again after waiting a preset time. The preset threshold may be determined by those skilled in the art based on experience and actual conditions, for example, may be determined according to the current manual analysis and processing time, and is not specifically limited.

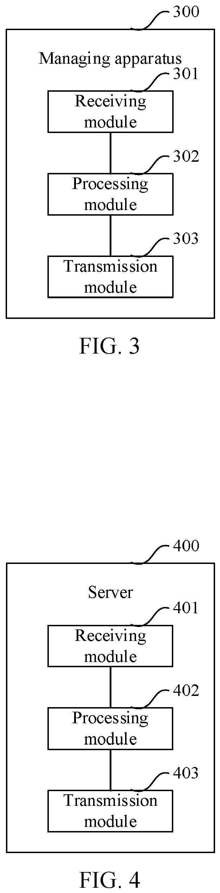

The present disclosure also provides a managing apparatus based on similar technical solutions. As illustrated in FIG. 3, the managing apparatus 300 may include a receiving module 301, a processing module 302, and a transmission module 303.

The receiving module 301 may be configured to receive the operating information of each server.

The processing module 302 may be configured to determine whether a first server has an anomaly according to the operating information of each server, determine a target processing method according to the operating information of the first server and a pre-configured the operating information of anomalies and the processing methods when the first server is determined to have the anomaly, and generate a processing instruction according to the target processing method.

The transmission module may be configured to send the processing instruction to the first server to make the first server execute the processing instruction and process using the target processing method.

In one embodiment, the operating information may include the anomaly information. The anomaly information may include a type of a software anomaly.

The processing module 302 of the managing apparatus may be configured to determine at least one target analysis instruction according to the type of the software anomaly corresponding to the first server, and a pre-configured correspondence between the types of software anomalies and the analysis instructions. The analysis instructions may be configured to analyze causes of the software anomalies.

The transmission module 303 may be configured to send the at least one analysis instruction to the first server to make the first server execute the at least one analysis instruction and generate receipt message according to an execution result.

The receiving module 301 may be configured to receive at least one receipt message from the first server.

The processing module 302 may be further configured to determine a target processing method according to a pre-configured correspondence between the causes of the anomalies and the processing methods after determining a cause of the software anomaly according to the at least one receipt message.

In one embodiment, the transmission module 303 may be configured to send a first target analysis instruction to the first server, such that the first server executes the first target analysis instruction and generates first receipt message according to the execution result. The first target analysis instruction may be any one target analysis instruction of at least one target analysis instruction and may be configured to analyze the first cause inducing the software anomaly.

The processing module 302 may be further configured to determine the target processing method according to the first cause and the correspondence between the anomaly causes and the processing methods if the software anomaly is determined to be induced by the first cause according to the first receipt message.

In one embodiment, the processing module 302 may be further configured to: if the software anomaly is determined to be not induced by the first cause, send a second target analysis instruction to the first server, until the software anomaly is determined to be induced by a second cause according to a second receipt message. The second target analysis instruction may be any one target analysis instruction of at least one target analysis instructions except the first target analysis instruction, and may be configured to analyze the second cause inducing the software anomaly. The second receipt message may be generated according to the execution result after the first server executes the second target analysis instruction.

In one embodiment, after the transmission module 303 sends the processing instruction to the first server, the transmission module 303 may be further configured to receive the updated operating information from the first server.

The processing module 302 may be further configured to: if the first server is determined to be no anomaly according to the updated operating information, record the history processing record corresponding to the first server. The history processing record may be configured to update the pre-configured correspondence between the operating information of the anomaly and the processing methods.

The present disclosure also provides a server based on the similar technical solutions. As illustrated in FIG. 4, the server 400 may include a receiving module 401, a processing module 402, and a transmission module 403.

The receiving module 401 may be configured to receive a processing instruction from the managing apparatus. The processing instruction may be generated based on a target processing method. After the managing apparatus determines that a server has an anomaly, the target processing method may be determined according to the operating information of the server and a pre-configured correspondence between the operating information of anomalies and the processing methods.

The processing module 402 may be configured to execute the processing instruction to process using the target processing method.

In one embodiment, the operating information may include the anomaly information. The anomaly information may include a type of a software anomaly.

Before receiving the processing instruction from the managing apparatus, the transmission module 401 may be further configured to receive at least one analysis instruction. The at least one analysis instruction may be determined by the managing apparatus according to the type of the software anomaly corresponding to the first server, and a pre-configured correspondence between the types of software anomalies and the analysis instructions. The analysis instructions may be configured to analyze causes of the software anomalies.

The processing module 402 may be further configured to execute the at least one analysis instruction and generate receipt message according to an execution result.

The transmission module 403 may be further configured to send at least one receipt message to the managing apparatus, such that the managing apparatus determines a cause of the software anomaly according to the at least one receipt message and then determines a target processing method according to a pre-configured correspondence between the causes of the anomalies and the processing methods.

In one embodiment, the processing module 402 may be configured to execute the first target analysis instruction and generate first receipt message according to the execution result. The first target analysis instruction may be any one target analysis instruction of at least one target analysis instruction, and may be configured to analyze the first cause inducing the software anomaly.

The transmission module 403 may be configured to send first receipt message to the managing apparatus, to make the managing apparatus determine a target processing method according a first cause to a pre-configured correspondence between the causes of the anomalies and the processing methods if the managing apparatus determines that the software anomaly is induced by the first cause according to the first receipt message.

In some embodiments, the receiving module 401 may be further configured to receive a second target analysis instruction from the managing apparatus. The second target analysis instruction may be any one target analysis instruction of at least one target analysis instructions except the first target analysis instruction, and may be configured to analyze the second cause inducing the software anomaly.

The processing module 402 may be further configured to execute the second target analysis instruction and generate second receipt message according to the execution result.

The transmission module 403 may be further configured to send the second receipt message to the managing apparatus.

In one embodiment, after the processing module 402 executes the processing instruction, the transmission module 403 may be further configured to send the updated operating information to the managing apparatus. If the first server is determined to be no anomaly according to the updated operating information, the managing apparatus may record the history processing record corresponding to the first server. The history processing record may be configured to update the pre-configured correspondence between the operating information of the anomaly and the processing methods.

The present disclosure provides a device having a function of implementing a method for processing server anomalies described above. This function may be implemented by executing corresponding software through hardware. In one embodiment, the device may include: a processor, a transceiver, and a memory. The memory may be configured to store computer-executable instructions, and the transceiver may be configured to implement communication between the device and other entities. The processor may be connected to the memory through buses. When the device is running, the processor may execute the computer-executable instructions stored in the memory, to make the device execute the method for processing server anomalies described above.

The present disclosure also provides a computer storage medium. The computer storage medium may be configured to store software programs. When the software programs are accessed and executed by one or more processors, the method for processing server anomalies described in above embodiments of the present disclosure may be implemented.

The present disclosure also provides a computer software product including instructions. When the software program product is executed in a computer, the computer may execute the method for processing server anomalies described in above embodiments of the present disclosure.

In the present disclosure, after the managing apparatus determines that a server has an anomaly, the managing apparatus may determine a target processing method according to the operation information of the first server and a preset correspondence between the operation information of anomalies and processing methods; and then generate a processing instruction according to the target processing method and send the processing instruction to the first server, to make the first server execute the processing instruction and process using the target processing method. The whole process may not require human participant and the managing apparatus may determine whether a server has an anomaly automatically according to the operation information of each server, and may also automatically send the processing instruction to the first server, to make the first server automatically process the anomaly. Compared with the existing method for manually processing server anomalies, in the present disclosure, the managing apparatus may automatically complete the server anomaly detection according to the operation information of each server, and each server can also execute the processing instructions according to the received processing instructions to complete anomaly processing. Further, by adopting the technical solution provided by the embodiment of the present disclosure, passive waiting for manual processing may be substituted by active automatic analysis and processing, thereby to reduce server anomaly processing time and improve the stability of service quality.

Those skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may take the form of a computer program product implemented on one or more computer-usable storage media (including, but not limited to, disk storage, CD-ROM, optical storage, etc.) containing computer-usable program code.

The present disclosure is described with reference to flowcharts and/or block diagrams of methods, devices (systems), and computer program products according to embodiments of the present disclosure. It should be understood that each process and/or block in the flowcharts and or block diagrams, and combinations of processes and/or blocks in the flowcharts and/or block diagrams can be implemented by computer program instructions. These computer program instructions may be provided to a processor of a general-purpose computer, special-purpose computer, embedded processor, or other programmable data processing device to produce a machine such that the instructions generated by the processor of the computer or other programmable data processing devices are configured to generate instructions means for implementing the functions specified in one or more flowcharts and/or one or more blocks of the block diagrams.

These computer program instructions may also be stored in a computer-readable memory capable of directing a computer or other programmable data processing device to work in a particular manner such that the instructions stored in the computer-readable memory produce a product including an instruction device. The instructions device implements the functions specified in one or more flowcharts and/or one or more blocks of the block diagram.

These computer program instructions can also be loaded on a computer or another programmable data processing device, so that a series of steps can be performed on the computer or another programmable device to produce a computer-implemented process, which can be executed on the computer or other programmable device. The instructions provide steps for implementing the functions specified in one or more flowcharts and/or one or more blocks of the block diagrams.

Although the preferred embodiments of the present disclosure have been described, those skilled in the art can make other changes and modifications to these embodiments once they know the basic inventive concepts. Therefore, the appended claims are intended to be construed to include the preferred embodiments and all changes and modifications that fall within the scope of the disclosure.

The embodiments disclosed herein are exemplary only. Other applications, advantages, alternations, modifications, or equivalents to the disclosed embodiments are obvious to those skilled in the art and are intended to be encompassed within the scope of the present disclosure.

## Claims

1. A method for processing server anomalies, comprising:
acquiring, by a managing apparatus, operation information of each server;
if the managing apparatus determines that a first server has an anomaly according to the operation information each server, determining, by the managing apparatus, a target processing method according to the operation information of the first server and a preset correspondence between operation information of anomalies and processing methods; and
generating, by the managing apparatus, a processing instruction according to the target processing method, and sending, by the managing apparatus, the processing instruction to the first server, such that the first server executes the processing instruction and uses the target processing method to process.

2. The method according to claim 1, wherein:
the operation information includes a type of a software anomaly; and
determining, by the managing apparatus, the target processing method according to the operation information of the first server and the preset correspondence between the operation information of the anomalies and the processing methods, includes:
determining, by the managing apparatus, at least one target analysis instruction according to the type of the software anomaly corresponding to the first server and a preset correspondence between types of software anomalies and analysis instructions, wherein the analysis instructions are configured to analyze causes of the software anomalies;
sending, by the managing apparatus, the at least one analysis instruction to the first server, such that the first server executes the at least one analysis instruction and generates at least one receipt message according to an execution result; and
after receiving the at least one receipt message from the first server and determining the cause of the software anomaly according to the at least one receipt message, determining, by the managing apparatus, the target processing method according to a preset correspondence between causes of the anomalies and the processing methods.

3. The method according to claim 2, wherein:
sending, by the managing apparatus, the at least one analysis instruction to the first server, such that the first server executes the at least one analysis instruction and generates the at least one receipt message according to the execution result, includes:
for a first target analysis instruction, sending, by the managing apparatus, the first target analysis instruction to the first server, such that the first server executes the first target analysis instruction and generates first receipt message according to the execution result, wherein the first target analysis instruction is any one target analysis instruction of the at least one target analysis instruction and is configured to analyze a first cause inducing the software anomaly; and
after the managing apparatus receives the at least one receipt message from the first server and determines the cause of the software anomaly according to the at least one receipt message, determining, by the managing apparatus, the target processing method according to a preset correspondence between the causes of the anomalies and the processing methods, includes:
if the software anomaly is determined to be induced by the first cause according to the first receipt message by the managing apparatus, determining, by the managing apparatus, the target processing method according to the first cause and the correspondence between the anomaly causes and the processing methods.

4. The method according to claim 3, further including:
if the managing apparatus determines that the software anomaly is not induced by the first cause according to the first receipt message, sending, by the managing apparatus, a second target analysis instruction to the first server, until the managing apparatus determines that the software anomaly is induced by a second cause according to a second receipt message, wherein:
the second target analysis instruction is any one target analysis instruction of the at least one target analysis instruction except the first target analysis instruction, and is configured to analyze the second cause inducing the software anomaly; and
the second receipt message is generated according to the execution result after the first server executes the second target analysis instruction.

5. The method according to any one of claims 1-3, after sending the processing instruction to the first server by the managing apparatus, further including:
receiving, by the managing apparatus, updated operating information from the first server; and
if the managing apparatus determines that the first server has no anomaly according to the updated operating information, recording, by the managing apparatus, history processing records corresponding to the first server, wherein the history processing record is configured to update the preset correspondence between the operation information of the anomalies and the processing methods.

6. A method for processing server anomalies, comprising:
receiving, by a server, a processing instruction from a managing apparatus, wherein: the processing instruction is generated according to a target processing method, and the target processing method is determined by the managing apparatus according to operation information of the server and a preset correspondence between operation information of anomalies and processing methods when the managing apparatus determines that the server has an anomaly; and
executing, by the server, the processing instruction, to use the target processing method to process.

7. The method according to claim 6, wherein:
the operation information includes a type of a software anomaly;
before receiving, by the server, the processing instruction from the managing apparatus, the method further includes:
receiving, by the server, at least one analysis instruction from the managing apparatus, wherein: the at least one target analysis instruction is determined by the managing apparatus according to the type of the software anomaly corresponding to the first server and a preset correspondence between types of software anomalies and analysis instructions, and the analysis instructions are configured to analyze causes of the software anomalies;
executing, by the server, the at least one analysis instruction and generating at least one receipt message according to an execution result; and
sending, by the server, the at least one receipt message to the managing apparatus, such that the managing apparatus determines the cause of the software anomaly according to the at least one receipt message and determines the target processing method according to a preset correspondence between causes of the anomalies and the processing methods.

8. The method according to claim 7, wherein:
executing, by the server, the at least one analysis instruction and generating the at least one receipt message according to the execution result, includes:
for a first target analysis instruction, executing, by the server, the first target analysis instruction and generating, by the server, a first receipt message according to the execution result, wherein the first target analysis instruction is any one target analysis instruction of the at least one target analysis instruction and is configured to analyze the first cause inducing the software anomaly; and
sending, by the server, the at least one receipt message to the managing apparatus, such that the managing apparatus determines the cause of the software anomaly according to the at least one receipt message and determines the target processing method according to a pre-configured correspondence between the causes of the anomalies and the processing methods, includes:
sending, by the server, the first receipt message to the managing apparatus; and if the managing apparatus determines that the software anomaly is induced by a first causes, determining, by the server, the target processing method according to a first cause and the correspondence between the anomaly causes and the processing methods.

9. The method according to claim 8, further including:
receiving, by the server, a second target analysis instruction from the managing apparatus, wherein: the second target analysis instruction is any one target analysis instruction of the at least one target analysis instructions except the first target analysis instruction, and is configured to analyze the second cause inducing the software anomaly;
executing, by the server, the second target analysis instruction, and generating, by the server, a second receipt message; and
sending, by the server, the second receipt message to the managing apparatus.

10. The method according to any one of claims 6-9, after executing, by the server, the processing instruction, further including:
sending, by the server, updated operation information to the managing apparatus, such that the managing apparatus records a history processing record corresponding to the server, wherein the history processing record is configured to update the pre-configured correspondence between the operation information of the anomaly and the processing methods.

11. A managing apparatus, comprising:
a receiving module, configured to receive operation information of each server;
a processing module, configured to determine a target processing method according to the operation information of a first server and a preset correspondence between the operation information of anomalies and processing methods when the managing apparatus determines that the first server has an anomaly according to the operation information of each server, and generate a processing instruction according to the target processing method; and
a transmission module, configured to send the processing instruction to the first server, such that the first server executes the processing instruction and uses the target processing method to process.

12. The apparatus according to claim 11, wherein:
the operation information includes a type of a software anomaly;
the processing module is configured to determine at least one target analysis instruction according to the type of the software anomaly corresponding to the first server and a pre-configured correspondence between types of software anomalies and analysis instructions, wherein the analysis instructions are configured to analyze causes of the software anomalies;
the transmission module is configured to send the at least one analysis instruction to the first server such that the first server executes the at least one analysis instruction and generates at least one receipt message according to an execution result;
the receiving module is configured to receive the at least one receipt message from the first server; and
the processing module is further configured to: after determining the cause of the software anomaly according to the at least one receipt message, determine the target processing method according to a pre-configured correspondence between the causes of the anomalies and the processing methods.

13. The apparatus according to claim 12, wherein:
the transmission module is configured to: for a first target analysis instruction, send the first target analysis instruction to the first server, such that the first server executes the first target analysis instruction and generates a first receipt message according to the execution result, wherein the first target analysis instruction is anyone target analysis instruction of the at least one target analysis instructions and is configured to analyze the first cause inducing the software anomaly; and
the processing module is configured to: determine the target processing method according to a first cause and the correspondence between the anomaly causes and the processing methods if the software anomaly is determined to be induced by the first cause according to the first receipt message.

14. The apparatus according to claim 13, wherein the processing module is configured to:
according to the first receipt message, after determining that the software anomaly is not induced by the first cause, send a second target analysis instruction to the first server, until, according to a second receipt message, it is determined that the software anomaly is induced by a second cause, wherein:
the second target analysis instruction is any one target analysis instruction of the at least one target analysis instructions except the first target analysis instruction, and is configured to analyze the second cause inducing the software anomaly; and
the second receipt message is generated according to the execution result after the first server executes the second target analysis instruction.

15. The apparatus according to any one of claims 11-14, wherein:
after the transmission module sends the processing instruction to the first server, the receiving module is further configured to receive updated operating information from the first server; and
the processing module is further configured to: when the managing apparatus determines that the first server has no anomaly according to the updated operating information, record a history processing record corresponding to the first server, wherein the history processing record is configured to update the pre-configured correspondence between the operation information of the anomaly and the processing methods.

16. A computer-readable storage medium, configured to store instructions, wherein:
when the instructions are executed by a computer, the computer implements the method for processing server anomalies according to any one of claims 1-10.

17. A computer device, comprising:
a memory, configured to store program instructions; and
a processor, configured to call the program instructions stored in the memory, to implement the method for processing server anomalies according to any one of claims 1-10.
